(19) Europäisches Patentamt
European Patent Office
Office européen des brevets

(11) **EP 3 208 924 B1**

(12) **FASCICULE DE BREVET EUROPEEN**

(45) Date de publication et mention
de la délivrance du brevet:
**02.05.2018 Bulletin 2018/18**

(51) Int Cl.:
***H02M 1/12*** *(2006.01)*    ***H02M 5/458*** *(2006.01)*
***H02M 7/46*** *(2006.01)*    ***H02M 7/23*** *(2006.01)*
***H02P 5/74*** *(2006.01)*

(21) Numéro de dépôt: **17150492.1**

(22) Date de dépôt: **06.01.2017**

(54) **PROCÉDÉ ET SYSTÈME DE COMMANDE POUR UNE INSTALLATION DE COMMANDE DE MOTEUR ÉLECTRIQUE**

STEUERVERFAHREN UND -SYSTEM FÜR EINE ANLAGE ZUR STEUERUNG EINES ELEKTROMOTORS

METHOD AND SYSTEM FOR CONTROLLING A CONTROL INSTALLATION OF AN ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2016 FR 1651320**

(43) Date de publication de la demande:
**23.08.2017 Bulletin 2017/34**

(73) Titulaire: **Schneider Toshiba Inverter Europe SAS 27120 Pacy sur Eure (FR)**

(72) Inventeurs:
• **MESSAOUDI, Mehdi**
**27200 Vernon (FR)**
• **BOULHARTS, Hocine**
**78510 Triel sur Seine (FR)**

(74) Mandataire: **Dufresne, Thierry**
**Schneider Electric Industries SAS**
**Service Propriété Industrielle**
**35 rue Joseph Monier - CS 30323**
**92506 Rueil-Malmaison Cedex (FR)**

(56) Documents cités:
**US-A1- 2006 034 364    US-A1- 2009 140 829**

**Description**

**Domaine technique de l'invention**

La présente invention se rapporte à un procédé de commande mis en oeuvre pour une installation de commande de moteur électrique et à un système de commande employée dans ladite installation pour mettre en oeuvre ledit procédé.

**Etat de la technique**

Il est connu d'employer des installations de commande à plusieurs convertisseurs pour commander un ou plusieurs moteurs électriques. On distingue ainsi différentes architectures :

- Dans une première architecture, l'installation comporte au moins deux convertisseurs de type onduleur connectés en parallèle à un même bus continu d'alimentation, chacun de ces onduleurs étant destiné à la commande d'un moteur électrique distinct.
- Dans une deuxième architecture, l'installation comporte un premier convertisseur de type redresseur actif connecté au réseau et un deuxième convertisseur de type onduleur destiné à la commande d'un moteur électrique.

De manière classique, les instants de commandes des transistors de chaque convertisseur sont déterminés par modulation de largeur d'impulsion (ci-après MLI). Une MLI de type intersective consiste à comparer une porteuse triangulaire symétrique ou asymétrique avec une ou plusieurs modulantes. Pour un transistor de puissance d'un convertisseur, les intersections entre une porteuse et une ou plusieurs modulantes définissent les instants de commutation à la fermeture et à l'ouverture du transistor.

Il est connu que l'augmentation de la fréquence de découpage appliquée à un convertisseur entraîne une hausse du courant de mode commun. Le courant de mode commun généré peut emprunter différents chemins entre le système et chaque moteur électrique. Ces chemins sont créés par des couplages capacitifs générés :

- Entre les conducteurs du câble reliant chaque convertisseur à sa charge électrique,
- Entre les enroulements du moteur et le stator, et
- Entre les transistors de chaque convertisseur et le dissipateur relié à la terre.

Lorsque l'installation comporte ainsi deux convertisseurs selon l'une des deux architectures décrites ci-dessus, la tension de mode commun totale est la somme des perturbations fournies par chacun des convertisseurs.

Habituellement, on utilise un filtre pour réduire les perturbations générées. Le filtre peut être composé de composants passifs et/ou actifs. Dans une solution de filtrage à composants passifs, celle-ci doit être dimensionnée pour :

- Entraîner une atténuation nécessaire des perturbations en vue de respecter des seuils standards prédéfinis de perturbations électromagnétiques,
- Garantir que son inductance de mode commun ne soit jamais saturée.

Pour filtrer ces tensions de mode commun, le filtre CEM présent en entrée est souvent surdimensionné pour répondre à ces deux contraintes et répondre ainsi au cas le plus défavorable de saturation du noyau magnétique de l'inductance du filtre.

Dans une installation réalisée selon une architecture à redresseur actif telle que décrite ci-dessus, différentes solutions ont été développées pour réduire le courant de mode commun. Ces solutions consistent par exemple en une action sur les commandes du redresseur et de l'onduleur.

Le document JP2003018853 propose par exemple une méthode pour réduire le courant de mode commun dans un variateur de vitesse en synchronisant la commutation à la fermeture (ou à l'ouverture) de trois transistors de puissance (hauts ou bas) de l'étage redresseur avec la commutation à la fermeture (ou à l'ouverture) des trois transistors correspondants (respectivement hauts ou bas) de l'étage onduleur. Cette solution permet de réduire la dimension du filtre employé pour filtrer le courant de mode commun et donc de diminuer les coûts du convertisseur.

Le brevet US6,185,115 décrit également une méthode permettant de synchroniser les commutations de l'étage redresseur avec les commutations de l'étage onduleur de manière à réduire la tension de mode commun. La méthode proposée consiste à synchroniser la commutation d'un seul bras de commutation de l'étage onduleur, en front montant et descendant, avec la commutation d'un seul bras de commutation de l'étage redresseur ce qui permet, pour une période de découpage, de passer seulement de douze fronts de tension à huit fronts de tension sur tous les bras de commutation.

La demande de brevet EP2442436A2 décrit également une méthode de synchronisation des commutations entre l'étage redresseur et l'étage onduleur. La méthode permet de synchroniser chaque commutation d'un transistor de l'étage redresseur avec une commutation de l'étage onduleur, permettant ainsi de réduire la tension de mode commun totale générée.

Cependant, les solutions décrites dans ces brevets antérieurs ne sont pas forcément satisfaisantes et ne peuvent pas s'appliquer pour des installations de commande qui présentent une architecture à au moins deux onduleurs en parallèle connectés à un même bus continu d'alimentation.

Le but de l'invention est donc de proposer un procédé de commande qui permette de limiter au maximum la génération de tension de mode commun, de manière à employer un filtre de mode commun dimensionné de manière adaptée, et qui puisse s'adapter à des installations de commande à au moins deux convertisseurs agencés selon différentes topologies.

Les documents US2006034364 et US2009140829 font partie de l'art antérieur pour la présente demande.

## Exposé de l'invention

Ce but est atteint par un procédé de commande mis en oeuvre pour une installation de commande de moteur électrique, ladite installation de commande comportant :

- Plusieurs phases d'entrée destinées à être connectées à un réseau électrique fournissant une tension alternative,
- Un filtre de mode commun connecté sur les phases d'entrée, comportant au moins une inductance,
- Un bus continu d'alimentation agencé pour fournir une tension continue,
- Un premier convertisseur connecté audit bus continu d'alimentation et commandé pour appliquer des premiers fronts de tension à un moteur électrique à partir d'une première modulation de largeur d'impulsion, obtenue en comparant une première porteuse, dite porteuse de référence, appliquée à une première fréquence de découpage, à une première modulante,
- Un deuxième convertisseur connecté audit bus continu d'alimentation et commandé à partir d'une deuxième modulation de largeur d'impulsion obtenue en comparant une deuxième porteuse, appliquée à une deuxième fréquence de découpage, à une deuxième modulante,
- Ladite deuxième porteuse étant destinée à être déphasée par rapport à la porteuse de référence d'un angle de déphasage.

Le procédé de commande de l'invention consiste à déterminer un angle de déphasage optimal à partir de la première fréquence de découpage et de la deuxième fréquence de découpage, ledit angle de déphasage optimal correspondant à l'angle de déphasage pour lequel le flux magnétique maximum vu par l'inductance du filtre de mode commun est le plus faible possible, permettant ainsi d'éviter toute saturation du noyau magnétique de l'inductance.

Selon une particularité, le procédé comporte une étape de détermination d'un ratio entre la première fréquence de découpage et la deuxième fréquence de découpage.

Selon une autre particularité, le procédé comporte une étape de lecture d'une table de données préétablie stockant plusieurs valeurs de ratio, et pour chaque valeur de ratio, une valeur d'angle de déphasage optimal théorique correspondant au flux magnétique maximum.

Selon une première variante de réalisation, l'angle de déphasage optimal correspond audit angle de déphasage optimal théorique si l'installation de commande présente une architecture symétrique par rapport à la terre.

Selon une deuxième variante de réalisation, l'angle de déphasage optimal correspond audit angle de déphasage optimal théorique auquel est ajoutée une valeur de correction si l'installation de commande présente une architecture asymétrique par rapport à la terre.

Selon une particularité, la valeur de correction est déterminée à partir d'une différence entre un flux magnétique théorique et un flux magnétique réel mesuré pour l'inductance du filtre de mode commun.

Selon une autre particularité, le procédé comporte une étape de détection de passage de la première porteuse à une valeur minimale et une étape de synchronisation de la deuxième porteuse par rapport à la première porteuse pour tenir compte de l'angle de déphasage optimal déterminé.

Selon une autre variante de réalisation, l'angle de déphasage optimal correspond à l'angle de déphasage optimal théorique auquel est ajoutée une valeur de 180°si le deuxième convertisseur de l'installation de commande est du type redresseur actif.

Selon une autre variante de réalisation, si l'installation de commande comporte un troisième convertisseur commandé à partir d'une troisième modulation de largeur d'impulsion, obtenue en comparant une troisième porteuse, appliquée à une troisième fréquence de découpage, à une troisième modulante, le procédé consiste à :

- Déterminer un premier ratio entre la fréquence de découpage de la première porteuse et la fréquence de découpage de la deuxième porteuse,
- Déterminer un deuxième ratio entre la fréquence de découpage de la première porteuse et la fréquence de découpage de la troisième porteuse,
- Déterminer un ensemble de deux angles de déphasage optimaux théoriques associé à un ensemble formé par le premier ratio et par le deuxième ratio déterminé.

L'invention concerne également un système de commande destiné à mettre en oeuvre le procédé de commande tel que défini ci-dessus, ledit système comportant au moins une unité de commande et comportant un module de détermination d'un angle de déphasage optimal théorique à partir de la première fréquence de découpage et de la deuxième fréquence de découpage, ledit angle de déphasage optimal à appliquer correspondant à l'angle de déphasage pour lequel le flux magnétique maximum vu par l'inductance du filtre de mode commun est le plus faible possible.

Selon une particularité, le système comporte un module de détermination d'un ratio entre la première fréquence de découpage et la deuxième fréquence de découpage.

Selon une autre particularité, le système comporte un module de lecture d'une table de données préétablie stockant plusieurs valeurs de ratio, et pour chaque valeur de ratio, une valeur d'angle de déphasage optimal théorique correspondant audit flux magnétique maximum déterminé.

Selon une première variante de réalisation, l'angle de déphasage optimal correspond audit angle de déphasage optimal théorique si l'installation de commande présente une architecture symétrique par rapport à la terre.

Selon une autre variante de réalisation, l'angle de déphasage optimal correspond audit angle de déphasage optimal théorique auquel est ajoutée une valeur de correction si l'installation de commande présente une architecture asymétrique par rapport à la terre.

Selon une particularité, la valeur de correction est déterminée à partir d'une différence entre un flux magnétique théorique et un flux magnétique réel mesuré pour l'inductance du filtre de mode commun.

Selon une autre particularité, le système comporte un module de détection de passage de la première porteuse à une valeur minimale et un module de synchronisation de la deuxième porteuse par rapport à la première porteuse pour tenir compte de l'angle de déphasage optimal déterminé.

Selon une autre variante de réalisation, l'angle de déphasage optimal correspond à l'angle de déphasage optimal théorique auquel est ajoutée une valeur de 180°si le deuxième convertisseur de l'installation de commande est du type redresseur actif.

Selon une autre variante de réalisation, si l'installation de commande comporte un troisième convertisseur commandé à partir d'une troisième modulation de largeur d'impulsion, obtenue en comparant une troisième porteuse, appliquée à une troisième fréquence de découpage, à une troisième modulante, le système comporte :

- Un module de détermination d'un premier ratio entre la fréquence de découpage de la première porteuse et la fréquence de découpage de la deuxième porteuse,
- Un module de détermination d'un deuxième ratio entre la fréquence de découpage de la première porteuse et la fréquence de découpage de la troisième porteuse,
- Un module de détermination d'un ensemble de deux angles de déphasage optimaux théoriques associé à un ensemble formé par le premier ratio et par le deuxième ratio déterminé.

**Brève description des figures**

D'autres caractéristiques et avantages vont apparaître dans la description détaillée qui suit faite en regard des dessins annexés dans lesquels :

- Les figures 1A et 1B représentent l'architecture d'une installation de commande de moteur électrique à deux onduleurs en parallèle connectés à un même bus continu d'alimentation et destinés chacun à la commande d'un moteur électrique distinct. La figure 1C permet d'illustrer les tensions de mode commun générées par une installation du type de celle représentée sur les figures 1A et 1B.

- La figure 2 représente l'architecture d'une installation de commande de moteur électrique présentant un redresseur actif et un onduleur connecté à un moteur électrique.

- Les figures 3A et 3B illustrent la variation du flux magnétique en fonction du déphasage appliqué entre deux porteuses.

- La figure 4 représente la courbe de variation du flux maximal vu par l'inductance du filtre de mode commun en fonction de l'angle de déphasage appliqué entre les deux porteuses.

- La figure 5 représente un exemple de table de données montrant le déphasage à appliquer entre deux porteuses en fonction du ratio entre les deux fréquences de découpage.

- La figure 6 illustre de manière schématique le principe de l'invention dans un premier cas de fonctionnement.

- La figure 7 illustre de manière schématique le principe de l'invention dans un deuxième cas de fonctionnement.

**Description détaillée d'au moins un mode de réalisation**

L'invention vise à proposer un procédé de commande qui pourra s'adapter à différentes architectures d'installations de commande de moteur électrique. Il pourra s'adapter à des architectures présentant au moins deux convertisseurs.

Pour simplifier, l'invention sera décrite ci-dessous pour des installations à deux convertisseurs mais il faut comprendre que le principe pourra s'appliquer pour des installations à plus de deux convertisseurs. Les particularités de fonctionnement liées à une installation à plus de deux convertisseurs seront détaillées par la suite.

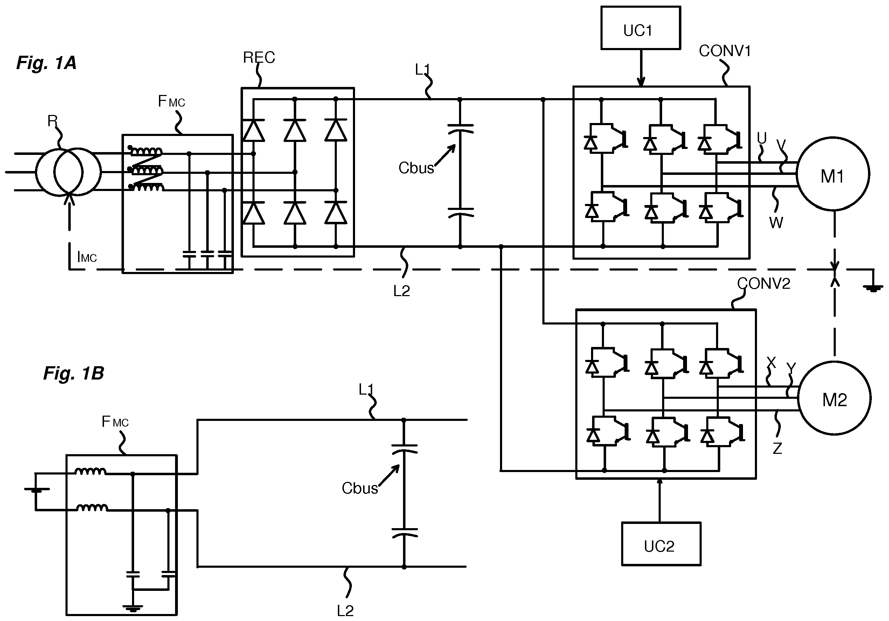

Une première architecture d'installation à deux convertisseurs est représentée sur la figure 1A et comporte :

- Plusieurs phases d'entrée connectées à un réseau électrique d'alimentation R, par exemple trois phases d'entrée s'il est connecté sur un réseau triphasé.
- Un redresseur REC passif, par exemple de type pont de diodes, permettant de transformer la tension alternative fournie par le réseau en une tension continue.

- Un bus continu d'alimentation doté d'une première ligne d'alimentation L1 à potentiel positif et d'une seconde ligne d'alimentation L2 à potentiel négatif entre lesquelles est appliquée la tension continue.
- Au moins un condensateur de bus Cbus connecté entre la première ligne d'alimentation L1 et la seconde ligne d'alimentation L2 et destiné à maintenir constante la tension continue sur le bus.
- Un premier convertisseur CONV1 de type onduleur connecté au bus continu d'alimentation et comprenant plusieurs bras de commutation connectés en parallèle entre les deux lignes d'alimentation. Chaque bras de commutation comporte au moins deux transistors, par exemple de type IGBT, connectés en série.
- Des premières phases de sortie U, V, W, chaque première phase de sortie étant connectée à un point milieu situé entre deux transistors d'un bras de commutation distinct du premier convertisseur de manière à être relié à un premier moteur électrique M1.
- Un deuxième convertisseur CONV2 de type onduleur connecté au bus continu d'alimentation, en parallèle du premier convertisseur CONV2, et comprenant également plusieurs bras de commutation connectés en parallèle entre les deux lignes d'alimentation. Chaque bras de commutation comporte au moins deux transistors, par exemple de type IGBT, connectés en série.
- Des deuxièmes phases de sortie X, Y, Z, chaque deuxième phase de sortie étant connectée à un point milieu situé entre deux transistors d'un bras de commutation distinct du deuxième convertisseur de manière à être relié à un deuxième moteur électrique M2.

Sur la figure 1B, l'installation de commande est connectée directement à une source de tension continue et ne nécessite donc pas de redresseur. L'architecture aval à deux convertisseurs de la figure 1A reste pour sa part identique et la solution de l'invention décrite ci-dessous est valable pour une installation connectée à une source de tension alternative (figure 1A) et à une source de tension continue (figure 1B).

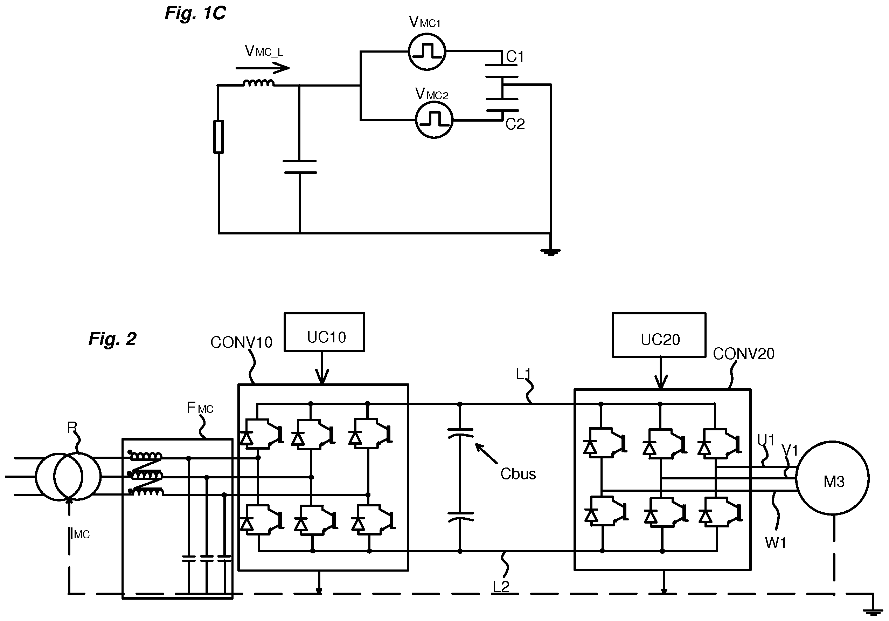

En conservant les mêmes références que sur la figure 1A pour les éléments communs et identiques, une deuxième architecture d'installation représentée sur la figure 2 comporte :

- Plusieurs phases d'entrée connectées à un réseau électrique d'alimentation R, par exemple trois phases d'entrée s'il est connecté sur un réseau triphasé.
- Un premier convertisseur CONV10 formé d'un redresseur actif permettant de transformer la tension alternative fournie par le réseau en une tension continue. Il comporte plusieurs bras de commutation dotés chacun par exemple d'au moins deux transistors de puissance, par exemple de type IGBT. En anglais, ce type de convertisseur avec un étage redresseur actif en entrée est communément appelé "Active front end".

- Un bus continu d'alimentation doté d'une première ligne d'alimentation L1 à potentiel positif et d'une seconde ligne d'alimentation L2 à potentiel négatif entre lesquelles est appliquée la tension continue.
- Au moins un condensateur de bus Cbus connecté entre la première ligne d'alimentation et la seconde ligne d'alimentation et destiné à maintenir constante la tension continue sur le bus.
- Un deuxième convertisseur CONV20, formé d'un onduleur connecté au bus continu d'alimentation et comprenant plusieurs bras de commutation connectés en parallèle entre les deux lignes d'alimentation L1, L2 du bus. Chaque bras de commutation comporte au moins deux transistors, par exemple de type IGBT, connectés en série.
- Des phases de sortie U1, V1, W1 connectées chacune à un point milieu situé entre deux transistors d'un bras de commutation distincts de l'onduleur et destinées à être relié à un moteur électrique M3.

Sur les figures annexées, les convertisseurs représentés sont connectés en triphasé et sont à deux niveaux, c'est-à-dire qu'ils comportent deux transistors de puissance commandés par bras de commutation. Bien entendu, l'invention pourra s'appliquer pour des architectures qui comportent des convertisseurs à trois niveaux ou plus.

De manière classique, les commandes des transistors de chaque convertisseur CONV1, CONV2, CONV10, CONV20 sont réalisées par modulation de largeur d'impulsion (ci-après MLI et nommé PWM pour « Pulse Width Modulation » en anglais). Une MLI de type intersective consiste à comparer une porteuse triangulaire symétrique ou asymétrique avec une ou plusieurs modulantes. Pour un transistor de puissance de l'étage onduleur ou de l'étage redresseur, les intersections entre une porteuse et une ou plusieurs modulantes définissent les instants de commutation à la fermeture et à l'ouverture du transistor.

Pour la commande de ses convertisseurs, l'installation représentée sur la figure 1A ou sur la figure 2 comporte un système de commande adapté. Le système de commande pourra comporter une unité de commande commune à tous les convertisseurs ou une unité de commande distincte associée à chaque convertisseur. Dans la suite de la description et de manière non limitative, nous considérerons une solution dans laquelle une unité de commande distincte est dédiée à la commande d'un convertisseur particulier. Deux unités de commande UC1, UC2 distinctes sont ainsi employées pour commander respectivement le premier convertisseur CONV1 et le deuxième convertisseur CONV2 de l'installation selon l'architecture de la figure 1A. Deux unités de commande UC10, UC20 distinctes sont ainsi employées pour commander respectivement le premier convertisseur CONV10 et le deuxième convertisseur CONV20 de l'installation selon l'architecture de la figure 2.

Chaque unité de commande UC1, UC2, UC10, UC20 détermine les instants de commutation par la modulation de largeur d'impulsion et envoie les ordres de commande correspondants aux transistors du convertisseur auquel elle est associée. Chaque transistor est associé à un dispositif de commande de grille qui reçoit les ordres de commande de son unité de commande. Chaque unité de commande comporte notamment un microprocesseur et des moyens de mémorisation.

Dans les deux architectures, un filtre de mode commun $F_{MC}$ comportant une inductance de mode commun est positionné sur les phases d'entrée connectées au réseau afin de filtrer les perturbations électromagnétiques générées par les commutations des convertisseurs. Ce type de filtre est bien connu et ne sera pas détaillé dans la présente demande. De manière connue, il comporte notamment une inductance présentant un noyau magnétique autour duquel sont réalisés trois enroulements connectés chacun en série sur une phase d'entrée distincte.

Dans une architecture à deux convertisseurs connectés au bus continu d'alimentation, le flux vu par l'inductance du filtre de mode de commun situé en entrée est fonction de l'ensemble des tensions de mode commun générées par les différents convertisseurs.

Selon l'invention, on arrive en effet à montrer que le flux vu par l'inductance de mode commun est fonction de l'intégral des tensions de mode commun.

En référence à la figure 1C qui représente, de manière simplifiée, l'architecture de la figure 1A et de la figure 1B, cette tension de mode commun $V_{MC\_L}$ vue par l'inductance est fonction :

- Des tensions de mode commun $V_{MC1}$, $V_{MC2}$ générées par chacun des deux convertisseurs du système,

- Des capacités parasites C1, C2 présentes entre les conducteurs de puissance et la terre.

Or, il s'avère que le flux magnétique maximal généré dans l'inductance du filtre évolue dans le temps de façon non maîtrisée, pouvant entraîner la saturation de son noyau magnétique. Pour remédier à la probabilité de saturation du noyau magnétique de l'inductance, la solution la plus simple consiste à surdimensionner le filtre pour répondre au cas le plus défavorable.

Sur les figures 1A et 2, le chemin suivi par le courant de mode commun $I_{MC}$ est représenté par les traits en pointillés.

L'invention décrite ci-dessous permet cependant de limiter le surdimensionnement du filtre en proposant de maîtriser le flux vu par l'inductance du filtre de mode commun $F_{MC}$.

L'invention sera décrite plus précisément pour la première architecture de l'installation qui est représentée sur la figure 1A. Cependant, il faut comprendre que la solution sera identique pour sa variante de la figure 1B et pour la deuxième architecture d'installation représentée sur la figure 2 et qu'elle sera reproductible pour toute architecture qui comporte plus de deux convertisseurs connectés en parallèle.

Pour cela, l'invention consiste à agir sur l'angle de déphasage $\Psi$ entre les porteuses employées pour la commande de chacun des deux convertisseurs CONV1, CONV2 de l'installation.

Pour la commande de chaque transistor du premier convertisseur, une première modulation de largeur d'impulsion est mise en place par la première unité de commande UC1, employant au moins une première porteuse générée à une première fréquence de découpage $f_{sw1}$, et une première modulante.

Pour la commande de chaque transistor du deuxième convertisseur, une deuxième modulation de largeur d'impulsion est mise en place par la deuxième unité de commande UC2, employant au moins une deuxième porteuse générée à une deuxième fréquence de découpage $f_{sw2}$, et une deuxième modulante.

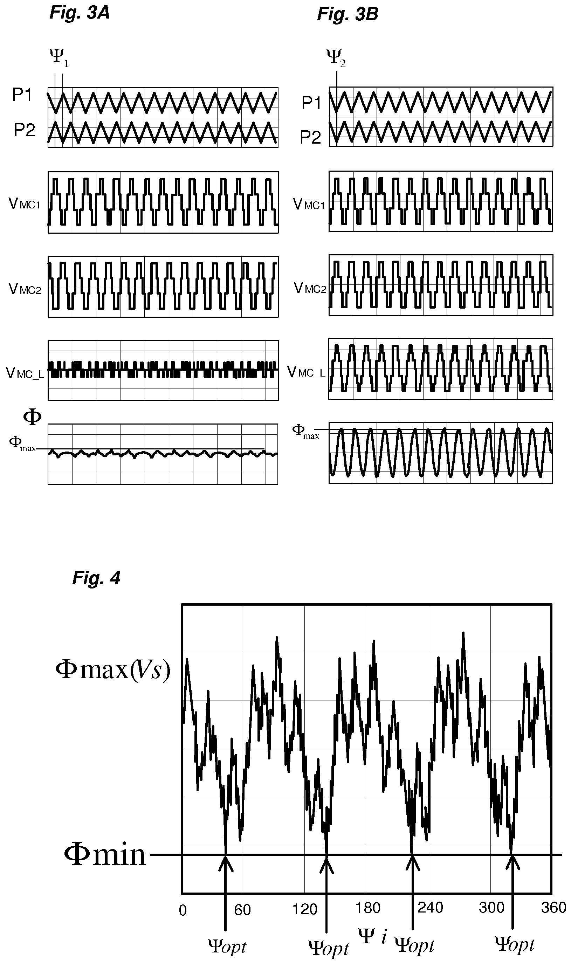

Les figures 3A et 3B illustrent la variation du flux maximal $\Phi_{max}$ vue par l'inductance du filtre de mode commun lorsque le premier convertisseur CONV1 est commandé avec une première porteuse P1 générée à une première fréquence de découpage $f_{sw1}$ et le deuxième convertisseur CONV2 est commandé avec une deuxième porteuse P2 générée à une deuxième fréquence de découpage $f_{sw2}$, les deux porteuses étant déphasés d'un angle de déphasage différent $\Psi_1, \Psi_2$ entre la figure 3A et la figure 3B. Sur la figure 3A, l'angle de déphasage est non nul et sur la figure 3B, l'angle de déphasage est par exemple choisi nul. Entre les deux figures, on remarque l'influence de l'angle de déphasage entre les porteuses sur la valeur du flux maximal vu par l'inductance du filtre. Sur la figure 3A, le flux maximum détecté est en effet plus faible que sur la figure 3B.

Le but de l'invention est donc de déterminer un angle de déphasage optimal $\Psi_{opt}$ à appliquer entre la première porteuse et la deuxième porteuse pour que le flux maximal $\Phi_{max}$ vu par l'inductance du filtre de mode commun soit le plus faible possible, permettant ainsi d'éviter toute saturation de son noyau magnétique. L'une des deux porteuses sera définie comme la porteuse de référence et l'autre sera déphasée par rapport à celle-ci de l'angle de déphasage optimal $\Psi_{opt}$ déterminé.

L'angle de déphasage optimal $\Psi_{opt}$ à appliquer entre les deux porteuses est déterminé à partir d'un ratio, désigné ki, entre les deux fréquences de découpage $f_{sw1}$, $f_{sw2}$. Ce ratio prendra plusieurs valeurs distinctes selon la valeur de la première fréquence de découpage et la valeur de la deuxième fréquence de découpage. Il est défini de manière arbitraire par la relation suivante :

$$k_i = \frac{f_{sw1}}{f_{sw2}}$$

Avec :

- i allant de 1 à n et n supérieur ou égal à 2,

- $f_{sw1}$ la fréquence de découpage de la première porteuse,

- $f_{sw2}$ la fréquence de découpage de la deuxième porteuse.

Selon la valeur prise par chaque fréquence de découpage, la valeur du ratio ki va donc varier. Pour chaque ratio entre les deux fréquences de découpage, il est possible d'appliquer plusieurs angles de déphasage entre les deux porteuses. Pour chacun de ces angles de déphasage, le flux maximum vu par l'inductance du filtre de mode commun sera potentiellement différent. Un angle de déphasage optimal théorique $\Psi_{i\_opt\_th}$ sera ainsi associé à chaque valeur du ratio ki pour lequel le flux maximum vu par l'inductance de mode commun est théoriquement minimal si le montage de l'architecture est symétrique par rapport à la terre.

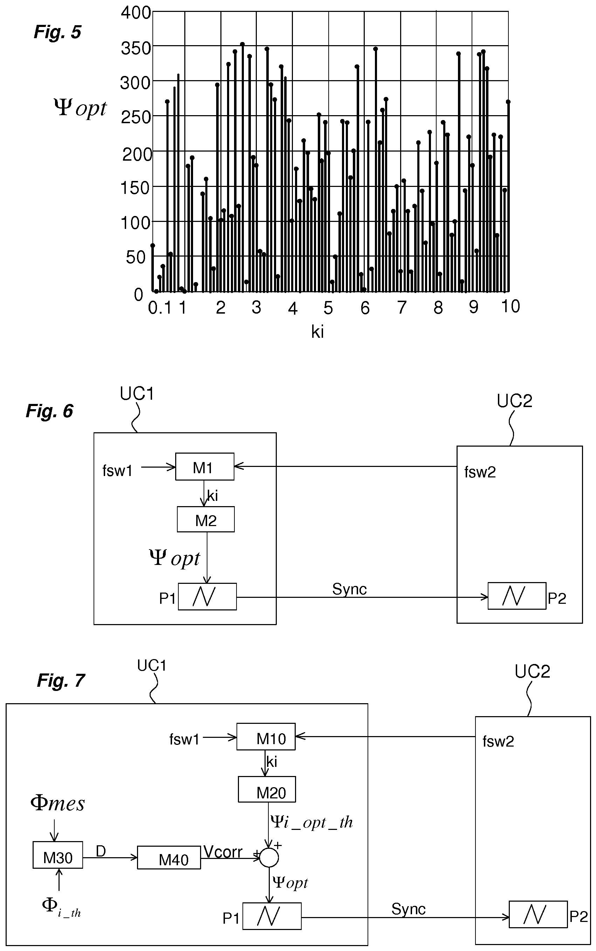

Préférentiellement, les angles de déphasage optimaux théoriques $\Psi_{i\_opt\_th}$ sont par exemple stockés en liaison avec chaque ratio ki dans une table de données préétablie. La figure 5 montre une représentation de la table de données mettant en relation chaque angle de déphasage $\Psi_{i\_opt\_th}$ en fonction d'un ratio ki entre la première fréquence de découpage et la deuxième fréquence de découpage.

La table de données préétablie sera préférentiellement mémorisée dans les moyens de mémorisation de l'une ou des deux unités de commande UC1, UC2. La table de données pourra être établie lors d'une phase d'apprentissage ou par simulation, avant d'être injectée dans les moyens de mémorisation. Pour l'établir, il s'agira alors, pour chaque valeur de ratio ki entre les deux fréquences de découpage :

- de balayer les différentes valeurs possibles de l'angle de déphasage,

- pour chaque angle de déphasage, de déterminer, par mesure ou par calcul, le flux magnétique vu par l'inductance du filtre de mode commun,

- pour chaque angle de déphasage, de déterminer le flux magnétique maximum vu par l'inductance du filtre de mode commun,

- de mémoriser l'angle de déphasage optimal théorique $\Psi_{i\_opt\_th}$ pour lequel la valeur du flux magnétique maximum est minimale.

Partant de ces principes généraux, on distingue deux cas :

- Un premier cas dans lequel les capacités parasites C1 et C2 sont égales, c'est-à-dire que le montage est symétrique par rapport à la terre,

- Un deuxième cas dans lequel les capacités parasites sont différentes, c'est-à-dire que le montage est asymétrique par rapport à la terre.

Dans le premier cas, les câbles, les moteurs électriques et la connexion à la terre sont considérés comme identiques. Ainsi le flux vu par l'inductance du filtre de mode commun $F_{MC}$ est fonction de la somme des tensions de mode commun générées par chaque convertisseur CONV1, CONV2 et varie en fonction des deux fréquences de découpage $f_{sw1}$, $f_{sw2}$ appliquées aux deux porteuses définies ci-dessus.

Dans ce premier cas, l'angle de déphasage optimal $\Psi_{opt}$ à appliquer entre les deux porteuses correspond directement à l'angle de déphasage optimal théorique $\Psi_{i\_opt\_th}$ qui est associé au ratio ki déterminé entre les deux fréquences de découpage.

Pour ce premier cas, le procédé de commande de l'invention suit ainsi les étapes décrites ci-dessous en liaison avec la figure 6. De manière non limitative, on considère par exemple que les différentes étapes du procédé sont mises en oeuvre par la première unité de commande UC1, associée à la commande du premier convertisseur CONV1. Mais il faut comprendre qu'il pourrait s'agir de la deuxième unité de commande. La première porteuse est donc définie arbitrairement comme la porteuse de référence.

- La première unité de commande UC1 associée au premier convertisseur CONV1 comporte un module logiciel de lecture agencé pour lire la valeur de la première fréquence de découpage $f_{sw1}$ de la première porteuse générée pour la commande du premier convertisseur et pour envoyer une requête à destination de la deuxième unité de commande UC2 en vue d'obtenir la valeur de la deuxième fréquence de découpage $f_{sw2}$ de la deuxième porteuse appliquée par la deuxième unité de commande UC2 pour la commande du deuxième convertisseur CONV2. A réception de la requête, la deuxième unité de commande UC2 envoie la valeur de la deuxième fréquence de découpage $f_{sw2}$ à la première unité de commande UC1.

- La première unité de commande UC1 est agencée pour activer un module de calcul M1 du ratio ki entre les deux valeurs de fréquence de découpage obtenues.

- A partir du ratio ki calculé, la première unité de commande UC1 exécute un module de détermination M2 d'un angle de déphasage optimal $\Psi_{opt}$ à appliquer entre la première porteuse, qui forme la porteuse de référence, et la deuxième porteuse. Comme décrit ci-dessus, l'angle de déphasage optimal $\Psi_{opt}$ pourra être obtenu en lisant directement la table de données préétablie (figure 5).

- La première unité de commande UC1 est agencée pour appliquer l'angle de déphasage optimal $\Psi_{opt}$ déterminé entre les deux porteuses. Pour cela :

  - La première unité de commande UC1 exécute un module de détection agencé pour détecter un instant auquel la première porteuse P1 passe à une valeur minimale.

  - A partir de l'instant déterminé, la première unité de commande UC1 lance un compteur afin d'attendre une durée correspondant à l'angle de déphasage optimal $\Psi_{opt}$ à appliquer. Lorsque la durée est atteinte, la première unité de commande UC1 exécute un module de synchronisation qui émet un bit de synchronisation Sync à destination de la deuxième unité de commande UC2.

  - A la réception du bit de synchronisation Sync, la deuxième unité de commande UC2 exécute un module de réinitialisation de la deuxième porteuse P2, ce module étant agencé pour forcer la deuxième porteuse P2 à la valeur minimale.

- Ces étapes ci-dessus doivent être à nouveau mises en oeuvre si le ratio ki entre les deux fréquences de découpage est modifié.

La figure 4 permet d'illustrer la variation du flux maximal obtenu en fonction de l'angle de déphasage optimal $\Psi_i$ appliqué entre les porteuses. On peut ainsi voir qu'il existe un flux minimal pour une ou plusieurs valeurs d'angle de déphasage optimal entre les porteuses.

Dans une installation de commande réalisée selon la deuxième architecture décrite ci-dessus, c'est-à-dire avec un premier convertisseur CONV10 de type redresseur actif et un deuxième convertisseur CONV20 de type onduleur connecté au moteur électrique, l'angle de déphasage optimal théorique $\Psi_{i\_opt\_th}$ déterminé selon la méthode décrite ci-dessus devra être corrigé d'une valeur de 180°. Bien entendu, ceci sera valable si le premier convertisseur CONV10 et le deuxième convertisseur CONV20 sont identiques.

Dans le deuxième cas évoqué ci-dessus, les montages ne sont plus identiques par rapport à la terre, ce qui signifie que les moteurs et/ou les câblages des deux convertisseurs sont différents, engendrant des valeurs de capacités parasites distinctes.

Dans ce deuxième cas, l'angle de déphasage optimal $\Psi_{opt}$ à appliquer ne sera pas l'angle de déphasage optimal théorique $\Psi_{i\_opt\_th}$ déduit directement à partir du ratio entre les deux fréquences de découpage car les capacités parasites C1, C2 ont des valeurs distinctes. Il s'agira donc de mettre en oeuvre une fonction de correction de l'angle de déphasage optimal théorique $\Psi_{i\_opt\_th}$ qui a été déduit du ratio entre les deux fréquences de découpage. Cette correction pourra être mise en oeuvre en temps réel pendant le fonctionnement du système ou déterminée préalablement à ce fonctionnement par simulation ou en mettant en oeuvre une phase d'apprentissage. Une nouvelle table de données associant un angle de déphasage optimal théorique corrigé à chaque valeur de ratio ki pourra alors par exemple être mise en place et mémorisée dans les moyens de mémorisation de l'unité de commande.

Pour déterminer la correction à appliquer, la première unité de commande UC1 doit déterminer le flux magnétique réel circulant dans l'inductance du filtre de mode commun. Ce flux magnétique réel peut être obtenu :

- Par mesure directe au niveau de l'inductance en employant un capteur de flux magnétique,

- Par mesure indirecte à partir des tensions aux bornes de l'inductance du filtre de mode commun. Pour une inductance à trois enroulements, on a :

$$V_{MC\_bobine} = \frac{V_1 + V_2 + V_3}{3}$$

Avec V1, V2 et V3 la tension aux bornes de chaque enroulement de l'inductance.

Et on en déduit le flux magnétique à partir de la relation suivante :

$$\Phi = \frac{1}{N}\int V_{MC\_bobine}\,dt$$

En référence à la figure 7, en considérant une correction de l'angle de déphasage optimal théorique $\Psi_{i\_opt\_th}$ réalisée en temps réel, le procédé de l'invention mis en oeuvre dans le système de commande, suit ainsi les étapes suivantes :

- La première unité de commande UC1 associée au premier convertisseur CONV1 comporte un module logiciel de lecture agencé pour lire la valeur de la première fréquence de découpage $f_{sw1}$ de la première porteuse P1 générée pour la commande du premier convertisseur CONV1 et pour envoyer une requête à destination de la deuxième unité de commande UC2 en vue d'obtenir la valeur de la deuxième fréquence de découpage $f_{sw2}$ de la deuxième porteuse P2 appliquée par la deuxième unité de commande UC2 pour la commande du deuxième convertisseur CONV2. A réception de la requête, la deuxième unité de commande UC2 envoie la valeur de la deuxième fréquence de découpage à la première unité de commande.

- La première unité de commande UC1 est agencée pour activer un module de calcul M10 du ratio ki entre les deux valeurs de fréquence de découpage obtenues.

- A partir du ratio ki calculé, la première unité de commande UC1 exécute un module de détermination de l'angle de déphasage optimal théorique $\Psi_{i\_opt\_th}$ à appliquer entre les deux porteuses. Comme décrit ci-dessus, l'angle de déphasage théorique $\Psi_{i\_opt\_th}$ pourra être obtenu en lisant la table de données préétablie (figure 5). A cet angle de déphasage optimal théorique $\Psi_{i\_opt\_th}$ correspond un flux minimal théorique $\Phi_{i\_th}$, qui sera par exemple stocké dans la table de données et lue par la première unité de commande UC1.

- En parallèle, la première unité de commande détermine un flux minimal réel $\Phi_{mes}$ à partir du flux magnétique déterminé selon l'une des deux méthodes décrites ci-dessus, c'est-à-dire par mesure directe ou indirecte durant une durée de traitement prédéfinie, par exemple égale à une seconde, cette durée étant valide quelles que soient les fréquences de découpage des différents convertisseurs.

- La première unité de commande exécute un module de comparaison M30 agencé pour comparer le flux minimal théorique $\Phi_{i\_th}$ au flux minimal réel $\Phi_{mes}$ en vue de déterminer une différence D. La différence D est par exemple injectée dans un module de correction M40, par exemple de type correcteur proportionnel intégral, en vue d'en déduire la valeur de correction Vcorr à appliquer à l'angle de déphasage optimal théorique $\Psi_{i\_opt\_th}$. La valeur de correction est ajoutée à l'angle de déphasage optimal théorique $\Psi_{i\_opt\_th}$ en vue d'obtenir un angle de déphasage corrigé qui correspond à l'angle de déphasage optimal $\Psi_{opt}$ permettant d'obtenir le flux minimal réel.

- La première unité de commande UC1 applique ensuite cet angle de déphasage optimal $\Psi_{opt}$ déterminé entre les deux porteuses P1, P2. Pour cela :

  - La première unité de commande UC1 exécute un module de détection agencé pour détecter un instant de détection auquel la première porteuse P1 passe à une valeur minimale.

  - A partir de l'instant de détection déterminé, la première unité de commande UC1 lance un compteur afin d'attendre une durée correspondant à l'angle de déphasage optimal $\Psi_{opt}$ à appliquer. Lorsque la durée est atteinte, la première unité de commande UC1 émet un bit de synchronisation à destination de la deuxième unité de commande UC2.

- A la réception du bit de synchronisation, la deuxième unité de commande UC2 exécute un module de réinitialisation de la deuxième porteuse P2 qui est agencé pour forcer la deuxième porteuse à la valeur minimale.

- Ces étapes ci-dessus doivent être à nouveau mises en oeuvre si le ratio entre les deux fréquences de découpage est modifié.

Les deux méthodes décrites ci-dessus, pour un montage symétrique ou asymétrique par rapport à la terre, sont applicables de manière similaire si l'installation comporte plus de deux convertisseurs. Dans une architecture à plus de deux convertisseurs, il s'agit de déterminer l'angle de déphasage optimal à appliquer à chaque porteuse de chaque convertisseur par rapport à la porteuse de référence. L'ensemble des angles de déphasage optimaux correspond à une valeur de flux minimal vu par l'inductance du filtre de mode commun. Cet ensemble est lié à un ensemble de ratios, chaque ratio de l'ensemble étant déterminé à partir d'une fréquence de découpage d'une porteuse associée à un convertisseur distinct et de la fréquence de découpage de la porteuse de référence. Ainsi, pour chaque ensemble de ratios, il existe un ensemble d'angles de déphasage optimaux à appliquer qui permet d'obtenir un flux magnétique minimal. L'association entre chaque ensemble de ratios et un ensemble d'angles de déphasage optimaux est par exemple mémorisée dans une table de données. Comme précédemment, cette table de données pourra être établie lors d'une phase d'apprentissage ou par simulation en balayant les différents paramètres et en sélectionnant les ensembles pour lesquels le flux magnétique est minimal.

La présente invention présente ainsi de nombreux avantages. Elle permet :

- D'optimiser la valeur du flux maximal vu par l'inductance du filtre de mode commun pour une architecture d'un système de commande à plusieurs onduleurs connectés en parallèle à un même bus continu d'alimentation.

- D'optimiser la valeur du flux maximal vu par l'inductance du filtre de mode commun pour une architecture d'un système de commande à un redresseur actif et un onduleur.

- D'optimiser la valeur du flux maximal vu par l'inductance du filtre de mode commun pour une architecture symétrique ou asymétrique par rapport à la terre.

- De sortir d'un état de saturation de l'inductance en mettant en place le procédé de l'invention de manière ponctuelle.

- De dimensionner le filtre de mode commun de manière optimale, évitant ainsi des problèmes de coût et d'encombrement.

**Revendications**

1. Procédé de commande mis en oeuvre pour une installation de commande de moteur électrique, ladite installation de commande comportant :

   - Plusieurs phases d'entrée destinées à être connectées à un réseau électrique fournissant une tension alternative,
   - Un filtre de mode commun ($F_{MC}$) connecté sur les phases d'entrée, comportant au moins une inductance,
   Un redresseur (REC, CONV10) permettant de transformer la tension alternative fournie par le réseau en une tension continue,
   - Un bus continu d'alimentation agencé pour fournir la tension continue,
   - Un premier convertisseur (CONV1, CONV20) connecté audit bus continu d'alimentation et commandé pour appliquer des premiers fronts de tension à un moteur électrique à partir d'une première modulation de largeur d'impulsion, obtenue en comparant une première porteuse, dite porteuse de référence, appliquée à une première fréquence de découpage, à une première modulante,
   - Un deuxième convertisseur (CONV2, CONV10) connecté audit bus continu d'alimentation et commandé à partir d'une deuxième modulation de largeur d'impulsion obtenue en comparant une deuxième porteuse, appliquée à une deuxième fréquence de découpage, à une deuxième modulante,
   - Ladite deuxième porteuse étant destinée à être déphasée par rapport à la porteuse de référence d'un angle de déphasage optimal,
   - **caractérisé en ce que** le procédé de commande consiste à déterminer l' angle de déphasage optimal à partir de la première fréquence de découpage et de la deuxième fréquence de découpage, ledit angle de déphasage optimal correspondant à l'angle de déphasage pour lequel le flux magnétique maximum, vu par l'inductance du filtre de mode commun, est le plus faible possible.

2. Procédé selon la revendication 1, **caractérisé en ce qu'**il comporte une étape de détermination d'un ratio (ki) entre la première fréquence de découpage et la deuxième fréquence de découpage.

3. Procédé selon la revendication 2, **caractérisé en ce qu'**il comporte une étape de lecture d'une table de données préétablie stockant plusieurs valeurs de ratio (ki), et pour chaque valeur de ratio, une valeur d'angle de déphasage optimal théorique $\Psi_{i\_opt\_th}$) correspondant à un flux magnétique maximum.

4. Procédé selon la revendication 3, **caractérisé en ce que** l'angle de déphasage optimal correspond audit angle de déphasage optimal théorique $\Psi_{i\_opt\_th}$) si l'installation de commande présente une architecture symétrique par rapport à la terre.

5. Procédé selon la revendication 3, **caractérisé en ce que** l'angle de déphasage optimal correspond audit angle de déphasage optimal théorique $\Psi_{i\_opt\_th}$) auquel est ajoutée une valeur de correction (Vcorr) si l'installation de commande présente une architecture asymétrique par rapport à la terre.

6. Procédé selon la revendication 5, **caractérisé en ce que** la valeur de correction (Vcorr) est déterminée à partir d'une différence entre un flux magnétique théorique ($\Phi_{i\_th}$) et un flux magnétique réel ($\Phi_{mes}$) mesuré pour l'inductance du filtre de mode commun.

7. Procédé selon l'une des revendications 4 à 6, **caractérisé en ce qu'**il comporte une étape de détection de passage de la première porteuse (P1) à une valeur minimale et une étape de synchronisation de la deuxième porteuse (P2) par rapport à la première porteuse pour tenir compte de l'angle de déphasage optimal ($\Psi_{opt}$) déterminé.

8. Procédé selon la revendication 3, caractérisé en ce l'angle de déphasage optimal correspond à l'angle de déphasage optimal théorique auquel est ajoutée une valeur de 180° si le deuxième convertisseur de l'installation de commande est du type redresseur actif.

9. Procédé selon la revendication 3, **caractérisé en ce que**, si l'installation de commande comporte un troisième convertisseur commandé à partir d'une troisième modulation de largeur d'impulsion, obtenue en comparant une troisième porteuse, appliquée à une troisième fréquence de découpage, à une troisième modulante, le procédé consiste à :

   - Déterminer un premier ratio entre la fréquence de découpage de la première porteuse et la fréquence de découpage de la deuxième porteuse,
   - Déterminer un deuxième ratio entre la fréquence de découpage de la première porteuse et la fréquence de découpage de la troisième porteuse,

- Déterminer un ensemble de deux angles de déphasage optimaux théoriques associé à un ensemble formé par le premier ratio et par le deuxième ratio déterminé.

10. Système de commande destiné à mettre en oeuvre le procédé de commande tel que défini dans l'une des revendications précédentes, ledit système comportant au moins une unité de commande (UC1, UC10, UC2, UC20) et étant **caractérisé en ce qu'**il comporte un module de détermination d'un angle de déphasage optimal à partir de la première fréquence de découpage et de la deuxième fréquence de découpage, ledit angle de déphasage optimal à appliquer correspondant à l'angle de déphasage pour lequel un flux magnétique maximum vu par l'inductance du filtre de mode commun est le plus faible possible.

11. Système selon la revendication 10, **caractérisé en ce qu'**il comporte un module de détermination d'un ratio (ki) entre la première fréquence de découpage et la deuxième fréquence de découpage.

12. Système selon la revendication 11, **caractérisé en ce qu'**il comporte un module de lecture d'une table de données préétablie stockant plusieurs valeurs de ratio (ki), et pour chaque valeur de ratio, une valeur d'angle de déphasage optimal théorique ($\Psi_{i\_opt\_th}$) correspondant audit flux magnétique maximum déterminé.

13. Système selon la revendication 12, **caractérisé en ce que** l'angle de déphasage optimal correspond audit angle de déphasage optimal théorique ($\Psi_{i\_opt\_th}$) si l'installation de commande présente une architecture symétrique par rapport à la terre.

14. Système selon la revendication 12, **caractérisé en ce que** l'angle de déphasage optimal correspond audit angle de déphasage optimal théorique ($\Psi_{i\_opt\_th}$) auquel est ajoutée une valeur de correction (Vcorr) si l'installation de commande présente une architecture asymétrique par rapport à la terre.

15. Système selon la revendication 14, **caractérisé en ce que** la valeur de correction (Vcorr) est déterminée à partir d'une différence entre un flux magnétique théorique ($\Phi_{i\_th}$) et un flux magnétique réel ($\Phi_{mes}$) mesuré pour l'inductance du filtre de mode commun.

16. Système selon l'une des revendications 12 à 15, **caractérisé en ce qu'**il comporte un module de détection de passage de la première porteuse (P1) à une valeur minimale et un module de synchronisation de la deuxième porteuse (P2) par rapport à la première porteuse pour tenir compte de l'angle de déphasage optimal ($\Psi_{opt}$) déterminé.

17. Système selon la revendication 12, **caractérisé en ce que** l'angle de déphasage optimal correspond à l'angle de déphasage optimal théorique auquel est ajoutée une valeur de 180° si le deuxième convertisseur de l'installation de commande est du type redresseur actif.

18. Système selon la revendication 12, **caractérisé en ce que**, si l'installation de commande comporte un troisième convertisseur commandé à partir d'une troisième modulation de largeur d'impulsion, obtenue en comparant une troisième porteuse, appliquée à une troisième fréquence de découpage, à une troisième modulante, le système comporte :

- Un module de détermination d'un premier ratio entre la fréquence de découpage de la première porteuse et la fréquence de découpage de la deuxième porteuse,
- Un module de détermination d'un deuxième ratio entre la fréquence de découpage de la première porteuse et la fréquence de découpage de la troisième porteuse,
- Un module de détermination d'un ensemble de deux angles de déphasage optimaux théoriques associé à un ensemble formé par le premier ratio et par le deuxième ratio déterminé.

**Patentansprüche**

1. Steuerverfahren, das für eine Anlage zur Steuerung eines Elektromotors umgesetzt wird, umfassend:

- mehrere Eingangsphasen, die dazu bestimmt sind, an ein Stromnetz, das eine Wechselspannung bereitstellt, angeschlossen zu werden,
- einen Gleichtaktfilter ($F_{MC}$), der an den Eingangsphasen angeschlossen ist, der mindestens eine Induktivität aufweist,
- einen Gleichrichter (REC, CONV10), der ermöglicht, die Wechselspannung, die von dem Netz bereitgestellt wird, in eine Gleichspannung umzuwandeln,
- einen Gleichstromversorgungsbus, der angeordnet ist, um die Gleichspannung bereitzustellen,
- einen ersten Wandler (CONV1, CONV20), der an den Gleichstromversorgungsbus angeschlossen wird und gesteuert wird, um erste Spannungsfronten an einen Elektromotor ausgehend von einer ersten Pulsweitenmodulation anzulegen, die durch Vergleichen eines ersten Trägers, des sogenannten Referenzträgers, der an eine erste Schaltfrequenz angelegt wird, mit einem ersten Modulator erhalten wird,
- einen zweiten Wandler (CONV2, CONV10), der an den Gleichstromversorgungsbus angeschlossen wird und ausgehend von einer zweiten Pulsweitenmodulation gesteuert wird, die durch Vergleichen eines zweiten Trägers, der an eine zweite Schaltfrequenz angelegt wird, mit einem zweiten Modulator erhalten wird,
- wobei der zweite Träger dazu bestimmt ist, gegenüber dem Referenzträger um einen optimalen Phasenverschiebungswinkel phasenverschoben zu werden,
- **dadurch gekennzeichnet, dass** das Steuerverfahren darin besteht, den optimalen Phasenverschiebungswinkel ausgehend von der ersten Schaltfrequenz und von der zweiten Schaltfrequenz zu bestimmen, wobei der optimale Phasenverschiebungswinkel dem Phasenverschiebungswinkel entspricht, für den der maximale magnetische Fluss gesehen von der Induktivität des Gleichtaktfilters möglichst gering ist.

2. Verfahren nach Anspruch 1, **dadurch gekennzeichnet, dass** es einen Schritt des Bestimmens eines Verhältnisses (ki) zwischen der ersten Schaltfrequenz und der zweiten Schaltfrequenz aufweist.

3. Verfahren nach Anspruch 2, **dadurch gekennzeichnet, dass** es einen Schritt des Lesens einer vorher festgelegten Datentabelle aufweist, die mehrere Verhältniswerte (ki) speichert, und wobei für jeden Verhältniswert ein Wert des theoretischen optimalen Phasenverschiebungswinkels ($\Psi_{i\_opt\_th}$) einem maximalen magnetischen Fluss entspricht.

4. Verfahren nach Anspruch 3, **dadurch gekennzeichnet, dass** der optimale Phasenverschiebungswinkel dem theoretischen optimalen Phasenverschiebungswinkel ($\Psi_{i\_opt\_th}$) entspricht, wenn die Anlage zur Steuerung eine Architektur aufweist, die gegenüber der Erde symmetrisch ist.

5. Verfahren nach Anspruch 3, **dadurch gekennzeichnet, dass** der optimale Phasenverschiebungswinkel dem theoretischen optimalen Phasenverschiebungswinkel ($\Psi_{i\_opt\_th}$) entspricht, zu dem ein Korrekturwert (Vcorr) hinzugefügt wird, wenn die Anlage zur Steuerung eine Architektur aufweist, die gegenüber der Erde asymmetrisch ist.

6. Verfahren nach Anspruch 5, **dadurch gekennzeichnet, dass** der Korrekturwert (Vcorr) ausgehend von einer Differenz zwischen einem theoretischen magnetischen Fluss ($\Phi_{i\_th}$) und einem tatsächlichen magnetischen Fluss ($\Phi_{mes}$), der für die Induktivität des Gleichtaktfilters gemessen wird, bestimmt wird.

7. Verfahren nach einem der Ansprüche 4 bis 6, **dadurch gekennzeichnet, dass** es einen Schritt des Erfassens eines Übergangs von dem ersten Träger (P1) zu einem Mindestwert und einen Schritt des Synchronisierens des zweiten Trägers (P2) in Bezug auf den ersten Träger aufweist, um den bestimmten optimalen Phasenverschiebungswinkel ($\Psi_{opt}$) zu berücksichtigen.

8. Verfahren nach Anspruch 3, **dadurch gekennzeichnet, dass** der optimale Phasenverschiebungswinkel dem theoretischen optimalen Phasenverschiebungswinkel entspricht, zu dem ein Wert von 180° hinzugefügt wird, wenn der zweite Wandler der Anlage zur Steuerung vom Typ des aktiven Gleichrichters ist.

9. Verfahren nach Anspruch 3, **dadurch gekennzeichnet, dass**, wenn die Anlage zur Steuerung einen dritten Wandler aufweist, der ausgehend von einer dritten Pulsweitenmodulation gesteuert wird, die durch Vergleichen eines dritten Trägers, der an eine dritte Schaltfrequenz angelegt wird, mit einem dritten Modulator erhalten wird, das Verfahren darin besteht:

- ein erstes Verhältnis zwischen der Schaltfrequenz des ersten Trägers und der Schaltfrequenz des zweiten Trägers zu bestimmten,
- ein zweites Verhältnis zwischen der Schaltfrequenz des ersten Trägers und der Schaltfrequenz des dritten Trägers zu bestimmten,
- eine Anordnung von zwei theoretischen optimalen Phasenverschiebungswinkeln zu bestimmen, die mit einer Anordnung verbunden ist, die durch das erste Verhältnis und durch das zweite bestimmte Verhältnis gebildet ist.

10. System zur Steuerung, das dazu bestimmt ist, das Verfahren zur Steuerung, wie in einem der vorhergehenden Ansprüche definiert, umzusetzen, wobei das System mindestens eine Steuereinheit (UC1, UC10, UC2, UC20) aufweist und **dadurch gekennzeichnet ist, dass** es ein Modul zum Bestimmen eines optimalen Phasenverschiebungswinkels ausgehend von der ersten Schaltfrequenz und von der zweiten Schaltfrequenz aufweist, wobei der optimale Phasenverschiebungswinkel, der anzuwenden ist, dem Phasenverschiebungswinkel entspricht, für den der maximale magnetische Fluss gesehen von der Induktivität des Gleichtaktfilters möglichst gering ist.

11. System nach Anspruch 10, **dadurch gekennzeichnet, dass** es ein Modul zum Bestimmen eines Verhältnisses (ki) zwischen der ersten Schaltfrequenz und der zweiten Schaltfrequenz aufweist.

12. System nach Anspruch 11, **dadurch gekennzeichnet, dass** es ein Modul zum Lesen einer vorher festgelegten Datentabelle aufweist, die mehrere Verhältniswerte (ki) speichert, und wobei für jeden Verhältniswert ein Wert des theoretischen optimalen Phasenverschiebungswinkels ($\Psi_{i\_opt\_th}$) dem maximalen magnetischen Fluss entspricht.

13. System nach Anspruch 12, **dadurch gekennzeichnet, dass** der optimale Phasenverschiebungswinkel dem theoretischen optimalen Phasenverschiebungswinkel ($\Psi_{i\_opt\_th}$) entspricht, wenn die Anlage zur Steuerung eine Architektur aufweist, die gegenüber der Erde symmetrisch ist.

14. System nach Anspruch 12, **dadurch gekennzeichnet, dass** der optimale Phasenverschiebungswinkel dem theoretischen optimalen Phasenverschiebungswinkel ($\Psi_{i\_opt\_th}$) entspricht, zu dem ein Korrekturwert (Vcorr) hinzugefügt ist, wenn die Anlage zur Steuerung eine Architektur aufweist, die gegenüber der Erde asymmetrisch ist.

15. System nach Anspruch 14, **dadurch gekennzeichnet, dass** der Korrekturwert (Vcorr) ausgehend von einer Differenz zwischen einem theoretischen magnetischen Fluss ($\Phi_{i\_th}$) und einem tatsächlichen magnetischen Fluss ($\Phi_{mes}$), der für die Induktivität des Gleichtaktfilters gemessen ist, bestimmt ist.

16. System nach einem der Ansprüche 12 bis 15, **dadurch gekennzeichnet, dass** es ein Modul zum Erfassen eines Übergangs von dem ersten Träger (P1) zu einem Mindestwert und ein Modul zum Synchronisieren des zweiten Trägers (P2) in Bezug auf den ersten Träger aufweist, um den bestimmten optimalen Phasenverschiebungswinkel ($\Psi opt$) zu berücksichtigen.

17. System nach Anspruch 12, **dadurch gekennzeichnet, dass** der optimale Phasenverschiebungswinkel dem theoretischen optimalen Phasenverschiebungswinkel entspricht, zu dem ein Wert von 180° hinzugefügt ist, wenn der zweite Wandler der Anlage zur Steuerung vom Typ des aktiven Gleichrichters ist.

18. System nach Anspruch 12, **dadurch gekennzeichnet, dass**, wenn die Anlage zur Steuerung einen dritten Wandler aufweist, der ausgehend von einer dritten Pulsweitenmodulation gesteuert ist, die durch Vergleichen eines dritten Trägers, der an eine dritte Schaltfrequenz angelegt ist, mit einem dritten Modulator erhalten ist, das Verfahren aufweist:

- ein Modul zum Bestimmen eines ersten Verhältnisses zwischen der Schaltfrequenz des ersten Trägers und der Schaltfrequenz des zweiten Trägers,

- ein Modul zum Bestimmen eines zweiten Verhältnisses zwischen der Schaltfrequenz des ersten Trägers und der Schaltfrequenz des dritten Trägers,

- ein Modul zum Bestimmen einer Anordnung von zwei theoretischen optimalen Phasenverschiebungswinkeln, die mit einer Anordnung verbunden ist, die durch das erste Verhältnis und durch das zweite bestimmte Verhältnis gebildet ist.

## Claims

1. Control method deployed in a control installation of an electric motor, wherein said control installation comprises:

- A number of input phases, which are designed for connection to an electric grid system for the delivery of an AC voltage,
- A common mode filter ($F_{MC}$) connected on the input phases, comprising at least one inductance,
- A rectifier (REC, CONV10) for the transformation of the AC voltage delivered by the supply system into a DC voltage,
- A DC supply bus, which is arranged for the delivery of the DC voltage,
- A first converter (CONV1, CONV20) connected to said DC supply bus, and controlled for the application of the first voltage pulse edges to an electric motor by means of a first pulse width modulation, obtained by comparing a first carrier signal, described as the reference carrier signal, applied at a first chopping frequency, with a first modulating signal,
- A second converter (CONV2, CONV10) connected to said DC supply bus and controlled by means of a second pulse width modulation, obtained by comparing a second carrier signal, applied at a second chopping frequency, with a second modulating signal,
- Said second carrier signal being designed to be out-of-phase with the reference carrier signal by an optimum phase-shift angle,
- **characterized in that** the control method involves the determination of an optimum phase-shift angle from the first chopping frequency and the second chopping frequency, wherein said optimum phase-shift angle corresponds to the phase-shift angle for which the maximum magnetic flux received by the inductance of the common mode filter is as low as possible.

2. Method according to Claim 1, **characterized in that** it comprises a step for the determination of a ratio (ki) between the first chopping frequency and the second chopping frequency.

3. Method according to Claim 2, **characterized in that** it comprises a step for the read-off of a predefined data table containing a number of stored values for the ratio (ki) and, for each ratio value, a notional optimum phase-shift angle ($\Psi_{i\_opt\_th}$) corresponding to a maximum magnetic flux.

4. Method according to Claim 3, **characterized in that** the optimum phase-shift angle corresponds to said notional optimum phase-shift angle $\Psi_{i\_opt\_th}$) if the control installation has a symmetrical architecture with regard to the ground.

5. Method according to Claim 3, **characterized in that** the optimum phase-shift angle corresponds to said notional optimum phase-shift angle ($\Psi_{i\_opt\_th}$), subject to the addition of a corrective value (Vcorr), if the control installation has an asymmetrical architecture with regard to the ground.

6. Method according to Claim 5, **characterized in that** the corrective value (Vcorr) is determined on the basis of the difference between a notional magnetic flux ($\Phi_{i\_th}$) and an actual magnetic flux ($\Phi_{mes}$) measured for the inductance of the common mode filter.

7. Method according to one of Claims 4 to 6, **characterized in that** it comprises a step for the detection of the achievement by the first carrier signal (P1) of a minimum value, and a step for the synchronization of the second carrier signal (P2) in relation to the first carrier signal, in order to take account of the determined optimum phase-shift angle ($\Psi_{opt}$).

8. Method according to Claim 3, **characterized in that** the optimum phase-shift angle corresponds to the notional optimum phase-shift angle, subject to the addition of a value of 180°, if the second converter in the control installation is of the active rectifier type.

9. Method according to Claim 3, **characterized in that**, if the control installation comprises a third converter which is controlled by means of a third pulse width modulation, obtained by the comparison of a third carrier signal, applied at a third chopping frequency, with a third modulating signal, the method comprises the following:

   - Determination of a first ratio between the chopping frequency of the first carrier signal and the chopping frequency of the second carrier signal,
   - Determination of a second ratio between the chopping frequency of the first carrier signal and the chopping frequency of the third carrier signal,
   - Determination of a series of two notional optimum phase-shift angles associated with a series formed by the first ratio and by the second ratio thus determined.

10. Control system designed for the deployment of the control method defined in one of the preceding claims, wherein said system comprises at least one control unit (UC1, UC10, UC2, UC20) and **characterized in that** it comprises a module for the determination of an optimum phase-shift angle from the first chopping frequency and the second chopping frequency, wherein said optimum phase-shift angle to be applied corresponds to the phase-shift angle for which a maximum magnetic flux received by the inductance of the common mode filter, is as low as possible.

11. System according to Claim 10, **characterized in that** it comprises a module for the determination of a ratio (ki) between the first chopping frequency and the second chopping frequency.

12. System according to Claim 11, **characterized in that** it comprises a module for the read-off of a predefined data table containing a number of stored values for a ratio (ki) and, for each ratio value, a notional optimum phase-shift angle ($\Psi_{i\_opt\_th}$) corresponding to said maximum magnetic flux thus determined.

13. System according to Claim 12, **characterized in that** the optimum phase-shift angle corresponds to said notional optimum phase-shift angle $\Psi_{i\_opt\_th}$) if the control installation has a symmetrical architecture with regard to the ground.

14. System according to Claim 12, **characterized in that** the optimum phase-shift angle corresponds to said notional optimum phase-shift angle ($\Psi_{i\_opt\_th}$), subject to the addition of a corrective value (Vcorr) if the control installation has an asymmetrical architecture with regard to the ground.

15. System according to Claim 14, **characterized in that** the corrective value (Vcorr) is determined on the basis of the difference between a notional magnetic flux ($\Phi_{i\_th}$) and an actual magnetic flux ($\Phi_{mes}$) measured for the inductance of the common mode filter.

16. System according to one of Claims 12 to 15, **characterized in that** it comprises a module for the detection of the achievement by the first carrier signal (P1) of a minimum value, and a module for the synchronization of the second carrier signal (P2) in relation to the first carrier signal, in order to take account of the optimum phase-shift angle ($\Psi_{opt}$) thus determined.

17. System according to Claim 12, **characterized in that** the optimum phase-shift angle corresponds to the notional optimum phase-shift angle, subject to the addition of a value of 180°, if the second converter in the control installation is of the active rectifier type.

18. System according to Claim 12, **characterized in that**, if the control installation comprises a third converter which is controlled by means of a third pulse width modulation, obtained by the comparison of a third carrier signal, applied at a third chopping frequency, with a third modulating signal, the system comprises:

  - A module for the determination of a first ratio between the chopping frequency of the first carrier signal and the chopping frequency of the second carrier signal,
  - A module for the determination of a second ratio between the chopping frequency of the first carrier signal and the chopping frequency of the third carrier signal,
  - A module for the determination of a series of two notional optimum phase-shift angles associated with a series formed by the first ratio and the second ratio thus determined.

Fig. 1A

Fig. 1B

EP 3 208 924 B1

**Fig. 1C**

**Fig. 2**

**Fig. 3A**

Ψ₁

P1

P2

V MC1

V MC2

V MC_L

Φ

Φ max

**Fig. 3B**

Ψ₂

P1

P2

V MC1

V MC2

V MC_L

Φ max

**Fig. 4**

$$\Phi max(Vs)$$

$$\Phi min$$

| 0 | 60 | 120 | 180 | 240 | 300 | 360 |

Ψopt        Ψopt    Ψ i  Ψopt        Ψopt

**Fig. 5**

$\Psi opt$

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 20030118853 A
- US 6185115 A
- EP 2442436 A2
- US 2006034364 A
- US 2009140829 A